# EUROPEAN PATENT SPECIFICATION

(11) **EP 3 509 825 B1**
(45) Date of publication and mention of the grant of the patent: **22.02.2023**
(21) Application number: 17767903.2
(22) Date of filing: 08.09.2017
(51) Int. Cl.: B29C 70/30, B29C 70/54

(54) **METHOD OF MANUFACTURING PRODUCTS FROM CARBON FIBRE COMPOSITE MATERIALS**
VERFAHREN ZUR HERSTELLUNG VON PRODUKTEN AUS KOHLENSTOFFFASERVERBUNDSTOFFEN
PROCÉDÉ DE FABRICATION DE PRODUITS À PARTIR DE MATÉRIAUX COMPOSITES EN FIBRES DE CARBONE

(30) Priority: 09.09.2016 GB 201615350
(43) Date of publication of application: 17.07.2019
(73) Proprietor: Aston Martin Lagonda Limited, Warwick, Warwickshire CV35 0DB (GB)
(72) Inventor: WEBB, Chris, Warwick Warwickshire CV35 0DB (GB); COOPER, Mark, Warwick Warwickshire CV34 4HU (GB)
(74) Representative: Morbidini, Marco
(86) International application number: PCT/GB2017/052629
(87) International publication number: WO 2018/046938

(56) References cited:
- EP-A1- 3 023 308
- GB-A- 2 471 318
- GB-A- 2 532 451
- US-A1- 2004 217 497
- US-A1- 2006 162 143
- Sanvik: "Machining carbon fibre materials Content", , 1 March 2010 (2010-03-01), XP055431052, Retrieved from the Internet: URL:https://www.sandvik.coromant.com/sitec ollectiondocuments/downloads/global/techni cal guides/en-gb/c-2920-30.pdf [retrieved on 2017-12-01]

## Description

The present invention relates to a method for the manufacture of components from carbon fibre composite materials. In particular, the invention is concerned with the manufacture of carbon fibre trim components having aesthetic features.

### BACKGROUND

Components made from carbon fibre composite materials are conventionally used in applications where light weight and high strength are required such as bicycle frames, vehicle bodies and parts for aircraft, etc. However, such materials are increasingly being used for their aesthetic qualities, particularly in high value consumer goods. In such aesthetically focused applications, it is often desirable to apply a "signature finish" to the goods so that consumers are able to connect the goods to their origin.

GB2532451 A discloses a method of producing an object made of composite materials. A tool having a mould surface is provided onto which uncured composite material is applied to form an assembly. The assembly is cured and a surface of the cured assembly is then machined.

The present invention seeks to provide a method of manufacturing carbon fibre trim components having a unique surface pattern.

### STATEMENTS OF INVENTION

According to an aspect of the invention, there is provided a method of manufacturing a trim component as claimed in claim 1. The trim component is manufactured from carbon fibre, the method comprising the step of producing a male component with a control surface, the control surface being arranged to correspond to a B surface of the trim component. That is, at some point during the method, the control surface is adapted to match the opposing contours of the B surface of the trim component. For example, the male component could be produced with a control surface that precisely matches the B surface of the trim component. Alternatively, the control surface may be produced so that it matches the B surface of the trim component only after is has undergone a predetermined expansion. The method further comprises the steps of consecutively placing individual sheets of a plurality of unidirectional carbon fibre sheets over the control surface to define a carbon fibre layer having a thickness greater than the maximum thickness of the trim component, wherein each sheet of the plurality of unidirectional carbon fibre sheets is rotated with respect to a preceding sheet such that the direction of the respective fibres of adjacent sheets misalign, curing the carbon fibre layer on the male component, removing the carbon fibre layer from the male component, securing the carbon fibre layer to a machining carriage with an outer surface matching the B surface of the trim component and, cutting the outer surface of the carbon fibre layer to expose an A surface of the trim component using a cutting tool travelling along a machining path, the cutting tool being arranged to cut the outer surface at a cutting angle in the range of 2 to 45 degrees with respect to the plane of the sheets at the location of the carbon fibre layer being cut.

Preferably, the cutting angle is in the range of 2 to 30 degrees. More preferably, the cutting angle is in the range of 2 to 15 degrees.

Preferably, the cutting tool is a ball nose cutter.

Preferably, the cutting tool is arranged such that side of the cutting tool used to cut the outer surface of the carbon fibre layer rotates in the same direction as the machining path, substantially parallel to the machining path.

Preferably, the method further comprising the steps of machining the outer surface of the carbon fibre layer to within the range of 0.5mm to 1mm before the A surface of the trim component using a first cutting tool and machining the remaining outer surface of the carbon fibre layer to expose the A surface of the trim component using a second cutting tool.

Preferably, the first cutting tool comprises a tungsten carbide cutting tip and the second cutting tool comprises a diamond cutting tip.

Preferably, each sheet of the plurality of unidirectional carbon fibre sheets is rotated within the range of 15 to 90 degrees with respect to the preceding sheet.

Preferably, each sheet of the plurality of unidirectional carbon fibre sheets is rotated within the range of 35 to 70 degrees with respect to the preceding sheet. More preferably, each sheet of the plurality of unidirectional carbon fibre sheets is rotated with respect to the preceding sheet by substantially 45 degrees.

Preferably, no sheets of the plurality of carbon fibre sheets are positioned such that the direction of their respective fibres is aligned.

Preferably, the method further comprises the step of smoothing the A surface of the trim component by sanding. Alternatively, the method further comprises the step of smoothing the A surface of the trim component using an abrasive blasting process.

Preferably, the method further comprises the step of applying a finishing matt lacquer to the A surface of the trim component. Alternatively, the method further comprises the step of applying a finishing gloss lacquer to the A surface of the trim component.

### DRAWINGS

The above and other aspects of the invention will now be described, by way of example only, with reference to the following drawings, in which:
FIG. 1 shows an example of a trim component manufactured using a method in accordance with the present invention;
FIG. 2 shows a perspective view of a tool for manufacturing the trim component of FIG. 1 using the method in accordance with the present invention;
FIG. 3 shows a cross-sectional side view of the tool of FIG. 2 including an outline of the trim component of FIG. 1;
FIG. 4 shows the cross-sectional side view of FIG. 3 with a carbon layer positioned over the tool; and,
FIG. 5 shows a cross-sectional side view of a machining carriage carrying the carbon layer of FIG. 4.

In the drawings, like parts are denoted by like reference numerals.

### SPECIFIC DESCRIPTION

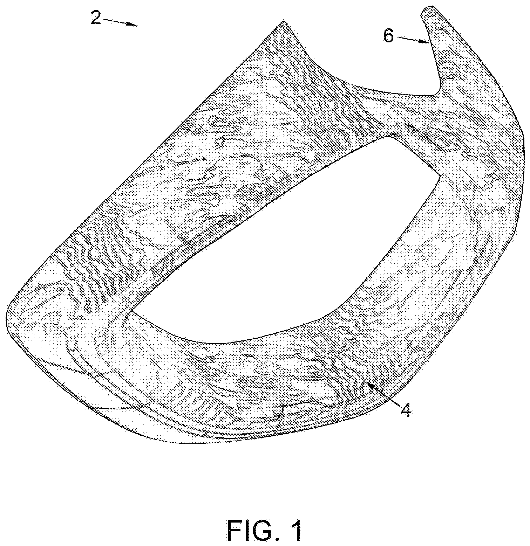

FIG. 1 shows an example of a trim component, generally designated by 2, which has been formed using a method in accordance with the present invention. This particular trim component 2 is for use in a control panel of an automobile, but the method may also be used to manufacture different internal or external trim components. The trim component 2 is a unitary structure comprising an A surface 4 and an inwardly facing surface 6 to the rear to the A surface 4 (hereinafter "the B surface 6"). The A surface comprises a complex surface pattern that is unique to this particular trim component 2 owing to the method by which it was formed. This unique surface pattern can be generally characterised as comprising a series of dark and relatively lighter irregular sections.

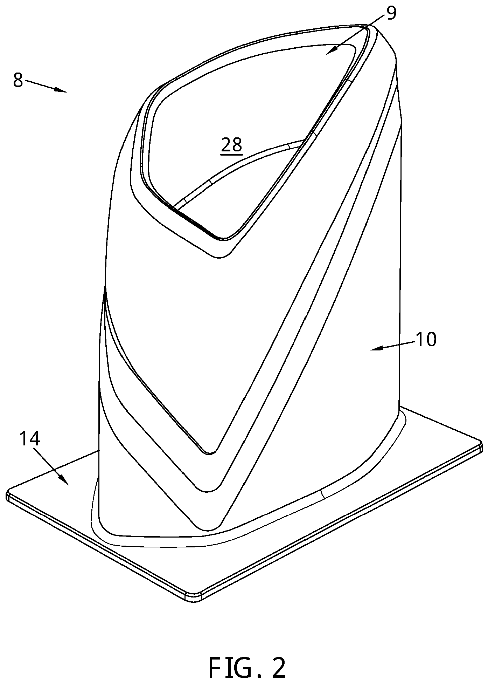

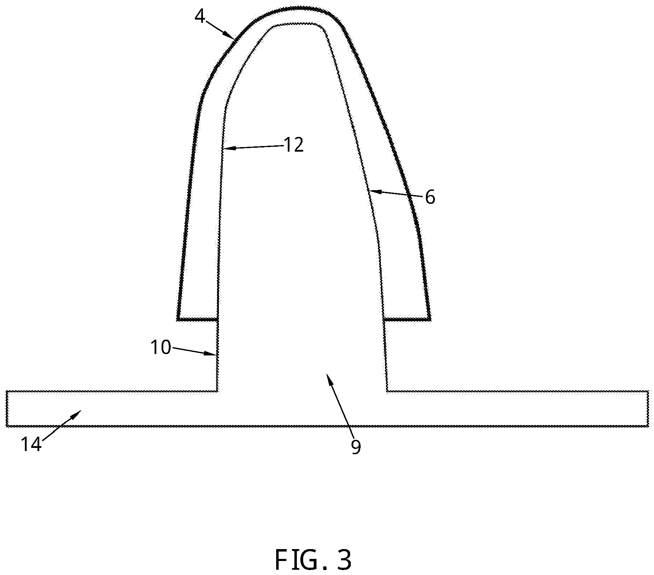

An embodiment of the method will now be described with reference to FIG. 2, which shows a perspective view of a tool, generally designated as 8, used for manufacturing the trim component 2. The tool 8 comprises a male component 9 outwardly extending from an integrated jig 14, which is used for holding the tool 8 in a fixed position during the manufacture of the trim component 2. The end of the male component 9 remote from the jig 14 comprises a cavity 28 which includes horizontal base portion. Computer-aided design, or the like, is used to provide a three dimensional representation of the trim component 2 such that the position of and spatial relationship between the A surface 4 and the B surface 6 is defined in three dimensional space. A three dimensional representation of the tool 8, and in particular the configuration of the male component 9, is then produced on the basis of the three dimensional representation of the trim component 2. Specifically, a substantial portion of an outer surface 10 of the male component 9 defines a three dimensional boundary 12 whose contours are designed to correspond with opposing contours of the B surface 6, as shown in FIG. 3. The configuration of the A surface 4 is, however, independent of the boundary 12 defined by the male component 9. Once the three dimensional representation of the tool 8 has been produced, the tool 8 can then be machined from a suitable material using a computer numerical control milling machine, or the like, on the basis of its three dimensional representation. In this particular embodiment, the tool 8 is made of aluminium, but other materials may also be used to make the tool 8 as such dense polyurethane or carbon fibre. A scale factor can be applied to the three dimensional representation of the tool 8 prior to the tool 8 being machined so as to alter the overall dimensions of the outer surface 10 and, in turn, the boundary 12. For example, a scale factor in the range of -0.01mm to -0.05mm might be used to reduce proportionally the overall size of the outer surface 10 of the tool 8 to account for any predetermined expansion that the tool 8 undergoes during the curing step of the method. Preferably, a scale factor of -0.02mm is used if the tool 8 is to be machined from aluminium.

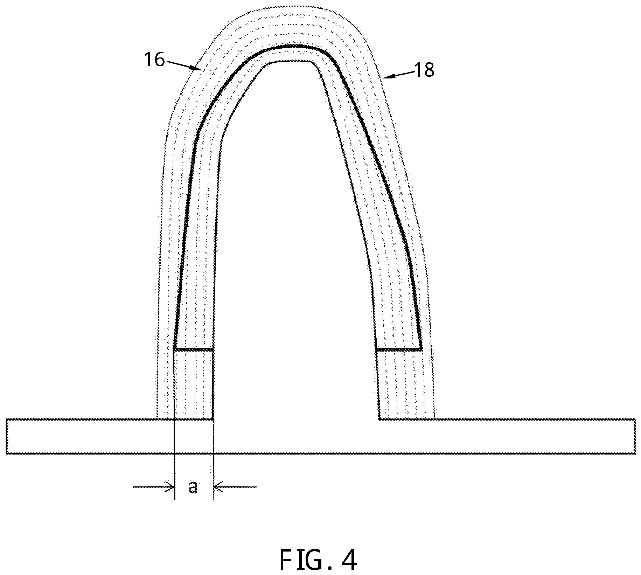

Turning to FIG. 4, once the tool 8 has been produced, a plurality of unidirectional carbon fibre sheets 16 are successively placed over the male component 9 to collectively define a carbon fibre layer, generally designated as 18. Each sheet 16 typically comprises four to eight layers of carbon resulting in an overall thickness approximately ranging from 0.1mm to 0.3mm and is pre-impregnated with resin. An inner surface 19 of the carbon fibre layer 18 is laid directly onto the boundary 12 of the male component 9 to form the B surface of the trim component 2. Importantly, each sheet 16 is rotated with respect to the preceding sheet 16 before being placed over the male component 9 ensuring the directions of the respective fibres in adjacent sheets 16 misalign. For example, before placing the second sheet 16 over the male component 9 and on top of the first sheet 16, the second sheet 16 is rotated with respect to the first sheet 16 to ensure that the direction of the fibres of the first and second sheets 16 misalign. The third sheet 16 is then rotated with respect to the first and second sheets 16 to ensure that the direction of the fibres of the third sheet 16 misalign with respect to the direction of the fibres of the first and second sheets 16, and so on. Preferably, a sheet 16 is rotated with respect to a preceding sheet 16 within the range of 15 to 90 degrees. More preferably, a sheet 16 can be rotated with respect to a preceding sheet 16 by substantially 45 degrees. The extent of rotation modifies the frequency of the dark and relatively lighter irregular sections on the A surface of the trim component 2 subject to the angle by which the A surface is machined. For example, a rotation of 15 degrees generally results in a more condensed series of the dark and relatively lighter irregular sections when compared to a rotation of 90 degrees, which generally results in a lower frequency series of irregular sections. Preferably, no two sheets 16 are positioned such that the direction of their respective fibres is aligned. However, it is more important to ensure that the direction of the fibres of adjacent sheets 16 is misaligned. It will be apparent to those skilled in the art that the amount by which a sheet 16 is rotated with respect to a preceding sheet 16 could also be random provided that the directions of the respective fibres of adjacent sheets 16 misalign. As an alternative to unidirectional fibres, the sheets 16 may comprise carbon fibres arranged in a swirling or curved configuration. Moreover, it is proposed that the fibres themselves may be laid directly on the male component 9 in order to form the carbon fibre layer 18 without first being arranged into sheets.

A sufficient number of sheets 16 are successively placed over the male component 9 until the thickness of the carbon fibre layer 18 is greater than the maximum thickness of the trim component 2, which is defined as the maximum distance between the A surface 4 and the B surface 6 and is shown in FIG. 4 as "a". In the embodiment shown, each sheet 16 has substantially the same thickness. However, it will be apparent to those skilled in the art that sheets 16 with differing thicknesses could also be used provided that the collective thickness of the sheets 16 is greater than the maximum thickness of the trim component 2.

In the embodiment shown, the carbon fibre layer 18 covers the entirety of the male component 9. However, it is not essential that the entirety of the male component 9 is covered by the carbon fibre layer 18 so long as the carbon fibre layer 18 at least covers the area defined by the boundary 12, which is used to as a control surface to create the B surface of the trim component 2.

Once the carbon fibre layer 18 has been built, it is cured in position on the tool 8 using an autoclave (not shown). Depending on the material from which the tool 8 is made, the tool 8 may expand due to the high temperatures used during the curing process, which can range from 90 to 120 C. The expansion of the tool 8 alters the boundary 12 defined by the male component 9, which, in turn, increases the area defined by the inner surface 19 of the carbon fibre layer 18. Provided the scale factor has been correctly applied to the three dimensional representation of the tool 8, the expansion of the tool 8 proportionally increases the surface area of the male component 9 so that the contours of the expanded boundary 12 correspond with opposing contours of the B surface 6. The inner surface 19 retains its increased area at the end of the curing process after the tool 8 has cooled down and returned to its original dimensions.

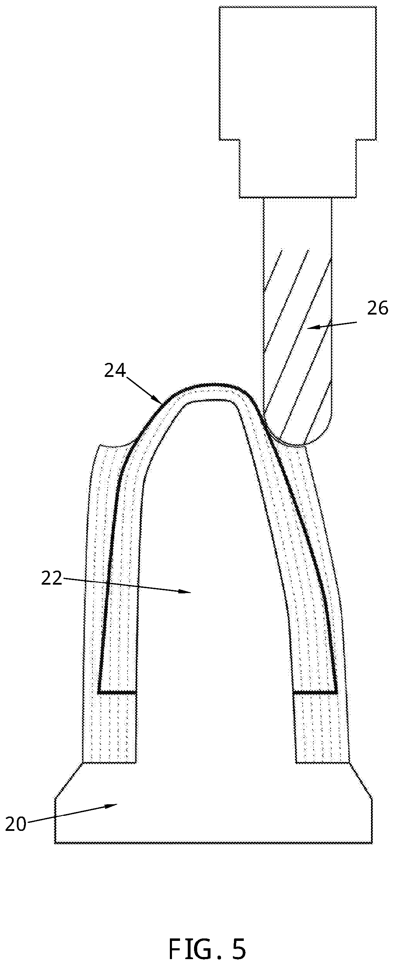

With reference to FIG. 5, once the carbon fibre layer 18 has cured in position on the tool 8, it is removed from the tool 8 and is mounted on and secured to a moveable machining carriage, generally designated by 20, of a three-axis computer numerical control milling machine (not shown). The carbon fibre layer 18 is removably secured to the machining carriage 20 by any suitable means. For example, the carbon fibre layer 18 can be produced to include integrated jigging features made from one or more of the sheets 16, which can be machined off from the final trim component 2. For this particular trim component 2, two sheets 16 can be laid in the cavity 38 of the tool 8, across the horizontal base portion, to provide an additional holding feature for the machining carriage 20. The machining carriage 20 is moveable with respect to a cutting tool 26 arranged to rotate about its longitudinal axis. The machining carriage 20 comprises a male component 22, an outer surface 24 of which is shaped to correspond to the B surface 6 of the trim component 2. This ensures that the inner surface 19 of the carbon fibre layer 18 precisely conforms to the outer surface 24 of the male component 22, which allows the inner surface 19 to be used as a controlled surface or reference point for the cutting tool 26.

During the machining stage, the cutting tool 26 rotates to remove excess material from the carbon fibre layer 18 to machine the carbon fibre layer 18 back to the required shape. That is, the carbon fibre layer 18 is machined back so as to expose the A surface of the trim component 2. Preferably, the cutting tool 26 is a ball nose cutter comprising a hemispherical end. Preferably, two different types of cutting tools 26 are used to machine the carbon fibre layer 18. First, a cutting tool 26 made of tungsten carbide, or the like, is used to remove the bulk of the excess material from the carbon fibre layer 18 up to approximately 0.5mm to 1mm before the A surface. Then a diamond tipped cutting tool 26 is used to remove the remaining material to expose the A surface.

The cutting tool 26 is configured to follow a machining path across the carbon fibre layer 18 as a result of the relative movement between the machining carriage 20 and the cutting tool 26. Generally only one side the cutting tool 26 is used at any one time to remove excess material from the carbon fibre layer 18. For example, the left side of the cutting tool 26 is used to remove excess material from the right side of the carbon fibre layer 18, as shown in FIG. 5. Preferably, the side of the cutting tool 26 used to machine the carbon fibre layer 18 is arranged to rotate in the same direction as the machine path to create a smoother finish and prevent excess material being lifted from the carbon fibre layer 18.

The cutting angle with which the cutting tool 26 cuts through the carbon fibre layer 18 is within the range 2 to 45 degrees with respect to the plane of the sheets 16 at the location of the carbon fibre layer 18 being machined. Preferably the cutting angle ranges from 5 to 30 degrees. The frequency of the dark and relatively lighter irregular sections on the A surface of the trim component 2 can be controlled with respect to the cutting angle. At an acute cutting angle of, for example, 15 degrees, the cutting tool 26 would cut through more of the sheets 16 forming the carbon fibre layer 18 as the cutting tool 26 moves across the carbon fibre layer 18 per unit length. This would typically result in a more condensed series of the dark and relatively lighter irregular sections when compared to a shallower cutting angle of, for example, 3 degrees, which would cause the cutting tool 26 to cut through fewer sheets 16 per unit length resulting in a lower frequency series of irregular sections.

Once the A surface has been exposed, it can then be smoothed by sanding or using an abrasive blasting process. Finally, a finishing lacquer can be applied to the A surface to bring out the contrast between the series of dark and relatively lighter irregular sections. Although the preferred embodiment of the method has been described in relation to the trim component 2, it is envisaged that the invention can be used to manufacture many other types of internal or external trim components, each having an A surface comprising a unique surface pattern. Moreover, it is also envisaged that the invention can be used to manufacture trim components for use outside of the automobile field, such as the marine and aerospace fields.

## Claims

1. A method of manufacturing a trim component (2) from carbon fibre, the trim component (2) comprising an A surface (4) and an inwardly facing B surface (6) to the rear of the A surface (4), the method comprising the steps of:
producing a male component (9) with a control surface (12), the control surface (12) being arranged to correspond to the B surface (6) of the trim component (2);
consecutively placing individual sheets (16) of a plurality of unidirectional carbon fibre sheets over the control surface (12) to define a carbon fibre layer (18) having a thickness greater than the maximum thickness of the trim component (2), wherein each sheet (16) of the plurality of unidirectional carbon fibre sheets is rotated with respect to a preceding sheet such that the directions of the respective fibres of adjacent sheets misalign;
curing the carbon fibre layer (18) on the male component (9);
removing the carbon fibre layer (18) from the male component (9);
securing the carbon fibre layer (18) to a machining carriage (20) with an outer surface (24) corresponding to the B surface (6) of the trim component (2); and,
cutting the outer surface of the carbon fibre layer (18) to expose the A surface (4) of the trim component (2) using a cutting tool (26) travelling along a machining path, the cutting tool (26) being arranged to cut the outer surface at a cutting angle in the range of 2 to 45 degrees with respect to the plane of the sheets (16) at the location of the carbon fibre layer being cut.

2. A method according to claim 1, wherein the cutting angle is in the range of 2 to 30 degrees.

3. A method according to claim 1 or 2, wherein the cutting angle is in the range of 2 to 15 degrees.

4. A method according to any preceding claim, wherein the cutting tool (26) is a ball nose cutter.

5. A method according to any preceding claim, wherein the cutting tool (26) is arranged such that side of the cutting tool used to cut the outer surface of the carbon fibre layer rotates in the same direction as the machining path.

6. A method according to any preceding claim, further comprising the steps of machining the outer surface of the carbon fibre layer to within the range of 0.5mm to 1mm before the A surface (4) of the trim component (2) using a first cutting tool (26) and machining the remaining outer surface of the carbon fibre layer to expose the A surface (4) of the trim component (2) using a second cutting tool (26).

7. A method according to claim 6, wherein the first cutting tool (26) comprises a tungsten carbide cutting tip and the second cutting tool (26) comprises a diamond cutting tip.

8. A method according to any preceding claim, wherein each sheet (16) of the plurality of unidirectional carbon fibre sheets (16) is rotated within the range of 15 to 90 degrees with respect to the preceding sheet (16).

9. A method according to any preceding claim, wherein each sheet (16) of the plurality of unidirectional carbon fibre sheets (16) is rotated within the range of 35 to 70 degrees with respect to the preceding sheet (16).

10. A method according to any preceding claim, wherein each sheet (16) of the plurality of unidirectional carbon fibre sheets (16) is rotated with respect to the preceding sheet (16) by substantially 45 degrees.

11. A method according to any preceding claim, wherein no sheets (16) of the plurality of carbon fibre sheets (16) are positioned such that the direction of their respective fibres is aligned.

12. A method according to any preceding claim, further comprising the step of smoothing the A surface (4) of the trim component (2) by sanding.

13. A method according to any one of claims 1 to 11, further comprising the step of smoothing the A surface (4) of the trim component (2) using an abrasive blasting process.

14. A method according to any preceding claim, further comprising the step of applying a finishing matt lacquer to the A surface (4) of the trim component (2).

15. A method according to any one of claims 1 to 13, further comprising the step of applying a finishing gloss lacquer to the A surface (4) of the trim component (2).

## Patentansprüche

1. Verfahren zur Herstellung einer Verkleidungskomponente (2) aus Kohlenstofffaser, wobei die Verkleidungskomponente (2) eine A-Oberfläche (4) und eine nach innen zeigende B-Oberfläche (6) rückseitig bezogen auf die A-Oberfläche (4) umfasst, wobei das Verfahren die Schritte umfasst:
Herstellen einer Patrizenkomponente (9) mit einer Steuerfläche (12), wobei die Steuerfläche (12) dafür beschaffen ist, der B-Oberfläche (6) der Verkleidungskomponente (2) zu entsprechen;
aufeinanderfolgendes Platzieren einzelner Lagen (16) einer Vielzahl von unidirektionalen Kohlenstofffaserlagen über der Steuerfläche (12), um eine Kohlenstofffaserschicht (18) mit einer Dicke von größer als die größte Dicke der Verkleidungskomponente (2) zu definieren, wobei jede Lage (16) der Vielzahl von unidirektionalen Kohlenstofffaserlagen bezogen auf eine vorangehende Lage gedreht wird, so dass die Richtungen der entsprechenden Fasern benachbarter Lagen ungleich sind;
Härten der Kohlenstofffaserschicht (18) auf der Patrizenkomponente (9);
Entfernen der Kohlenstofffaserschicht (18) von der Patrizenkomponente (9);
Befestigen der Kohlenstofffaserschicht (18) an einem Bearbeitungsschlitten (20) mit einer Außenoberfläche (24), die der B-Oberfläche (6) der Verkleidungskomponente (2) entspricht; und
Schneiden der Außenoberfläche der Kohlenstofffaserschicht (18), um die A-Oberfläche (4) der Verkleidungskomponente (2) freizulegen, unter Verwendung eines Schneidwerkzeugs (26), das sich entlang eines Bearbeitungswegs bewegt, wobei das Schneidwerkzeug (26) dafür beschaffen ist, die Außenoberfläche in einem Spanwinkel in dem Bereich von 2 bis 45 Grad bezogen auf die Ebene der Lagen (16) an der Stelle der Kohlenstofffaserschicht, die geschnitten wird, zu schneiden.

2. Verfahren gemäß Anspruch 1, wobei der Spanwinkel in dem Bereich von 2 bis 30 Grad liegt.

3. Verfahren gemäß Anspruch 1 oder 2, wobei der Spanwinkel in dem Bereich von 2 bis 15 Grad liegt.

4. Verfahren gemäß einem der vorstehenden Ansprüche, wobei das Schneidwerkzeug (26) ein Kugelfräser ist.

5. Verfahren gemäß einem der vorstehenden Ansprüche, wobei das Schneidwerkzeug (26) so beschaffen ist, dass sich die Seite des Schneidwerkzeugs, die zum Schneiden der Außenoberfläche der Kohlenstofffaserschicht verwendet wird, in der Richtung des Bearbeitungswegs dreht.

6. Verfahren gemäß einem der vorstehenden Ansprüche, ferner umfassend die Schritte des Bearbeitens der Außenoberfläche der Kohlenstofffaserschicht auf innerhalb des Bereichs von 0,5 mm bis 1 mm vor der A-Oberfläche (4) der Verkleidungskomponente (2) unter Verwendung eines ersten Schneidwerkzeugs (26) und Bearbeiten der verbleibenden Außenoberfläche der Kohlenstofffaserschicht zum Freilegen der A-Oberfläche (4) der Verkleidungskomponente (2) unter Verwendung eines zweiten Schneidwerkzeugs (26).

7. Verfahren gemäß Anspruch 6, wobei das erste Schneidwerkzeug (26) eine Wolframcarbid-Schneidspitze umfasst und das zweite Schneidwerkzeug (26) eine Diamant-Schneidspitze umfasst.

8. Verfahren gemäß einem der vorstehenden Ansprüche, wobei jede Lage (16) der Vielzahl von unidirektionalen Kohlenstofffaserlagen (16) in einem Bereich von 15 bis 90 Grad bezogen auf die vorangehende Lage (16) gedreht wird.

9. Verfahren gemäß einem der vorstehenden Ansprüche, wobei jede Lage (16) der Vielzahl von unidirektionalen Kohlenstofffaserlagen (16) in einem Bereich von 35 bis 70 Grad bezogen auf die vorangehende Lage (16) gedreht wird.

10. Verfahren gemäß einem der vorstehenden Ansprüche, wobei jede Lage (16) der Vielzahl von unidirektionalen Kohlenstofffaserlagen (16) um im Wesentlichen 45 Grad bezogen auf die vorangehende Lage (16) gedreht wird.

11. Verfahren gemäß einem der vorstehenden Ansprüche, wobei keine Lagen (16) der Vielzahl von Kohlenstofffaserlagen (16) so positioniert werden, dass die Richtungen ihrer entsprechenden Fasern fluchten.

12. Verfahren gemäß einem der vorstehenden Ansprüche, ferner umfassend den Schritt des Glättens der A-Oberfläche (4) der Verkleidungskomponente (2) durch Schleifen.

13. Verfahren gemäß einem der Ansprüche 1 bis 11, ferner umfassend den Schritt des Glättens der A-Oberfläche (4) der Verkleidungskomponente (2) unter Verwendung eines abrasiven Strahlverfahrens.

14. Verfahren gemäß einem der vorstehenden Ansprüche, ferner umfassend den Schritt des Aufbringens eines matten Decklacks auf die A-Oberfläche (4) der Verkleidungskomponente (2).

15. Verfahren gemäß einem der Ansprüche 1 bis 13, ferner umfassend den Schritt des Aufbringens eines glänzenden Decklacks auf die A-Oberfläche (4) der Verkleidungskomponente (2).

## Revendications

1. Procédé de fabrication d'un composant de garniture (2) à partir de fibre de carbone, le composant de garniture (2) comprenant une surface A (4) et une surface B (6) tournée vers l'intérieur à l'arrière de la surface A (4), le procédé comprenant les étapes de :
production d'un composant mâle (9) avec une surface de commande (12), la surface de commande (12) étant agencée pour correspondre à la surface B (6) du composant de garniture (2) ;
placement consécutivement de feuilles individuelles (16) d'une pluralité de feuilles de fibres de carbone unidirectionnelles sur la surface de commande (12) pour définir une couche de fibres de carbone (18) ayant une épaisseur supérieure à l'épaisseur maximale du composant de garniture (2), chaque feuille (16) de la pluralité de feuilles de fibres de carbone unidirectionnelles étant tournée par rapport à une feuille précédente de sorte que les directions des fibres respectives des feuilles adjacentes se désalignent ;
durcissement de la couche de fibres de carbone (18) sur le composant mâle (9) ;
retrait de la couche de fibres de carbone (18) du composant mâle (9) ;
fixation de la couche de fibres de carbone (18) sur un chariot d'usinage (20) dont la surface extérieure (24) correspond à la surface B (6) du composant de garniture (2) ; et,
découpe de la surface extérieure de la couche de fibres de carbone (18) pour exposer la surface A (4) du composant de garniture (2) en utilisant un outil de coupe (26) se déplaçant le long d'un trajet d'usinage, l'outil de coupe (26) étant agencé pour couper la surface extérieure selon un angle de coupe dans la plage de 2 à 45 degrés par rapport au plan des feuilles (16) à l'emplacement de la couche de fibres de carbone qui est coupée.

2. Procédé selon la revendication 1, l'angle de coupe étant compris entre 2 et 30 degrés.

3. Procédé selon la revendication 1 ou 2, l'angle de coupe étant compris entre 2 et 15 degrés.

4. Procédé selon l'une quelconque des revendications précédentes, l'outil de coupe (26) étant une fraise à nez sphérique.

5. Procédé selon n'importe quelle revendication précédente, l'outil de coupe (26) étant agencé de telle sorte que le côté de l'outil de coupe utilisé pour couper la surface extérieure de la couche de fibres de carbone tourne dans le même sens que le trajet d'usinage.

6. Procédé selon l'une quelconque des revendications précédentes, comprenant en outre les étapes d'usinage de la surface extérieure de la couche de fibres de carbone dans la plage de 0,5 mm à 1 mm avant la surface A (4) du composant de garniture (2) en utilisant un premier outil de coupe (26) et d'usinage de la surface extérieure restante de la couche de fibres de carbone pour exposer la surface A (4) du composant de garniture (2) en utilisant un second outil de coupe (26).

7. Procédé selon la revendication 6, le premier outil de coupe (26) comprenant une pointe de coupe en carbure de tungstène et le second outil de coupe (26) comprenant une pointe de coupe en diamant.

8. Procédé selon l'une quelconque des revendications précédentes, chaque feuille (16) de la pluralité de feuilles de fibres de carbone unidirectionnelles (16) étant tournée dans la plage de 15 à 90 degrés par rapport à la feuille précédente (16).

9. Procédé selon l'une quelconque des revendications précédentes, chaque feuille (16) de la pluralité de feuilles de fibres de carbone unidirectionnelles (16) étant tournée dans la plage de 35 à 70 degrés par rapport à la feuille précédente (16).

10. Procédé selon l'une quelconque des revendications précédentes, chaque feuille (16) de la pluralité de feuilles de fibres de carbone unidirectionnelles (16) étant tournée par rapport à la feuille précédente (16) de sensiblement 45 degrés.

11. Procédé selon l'une quelconque des revendications précédentes, aucune feuille (16) de la pluralité de feuilles de fibres de carbone (16) n'étant positionnée de telle sorte que la direction de leurs fibres respectives soit alignée.

12. Procédé selon l'une quelconque des revendications précédentes, comprenant en outre l'étape de lissage de la surface A (4) du composant de garniture (2) par sablage.

13. Procédé selon l'une quelconque des revendications 1 à 11, comprenant en outre l'étape de lissage de la surface A (4) du composant de garniture (2) par un procédé de projection abrasive.

14. Procédé selon l'une quelconque des revendications précédentes, comprenant en outre l'étape d'application d'une laque mate de finition sur la surface A (4) du composant de garniture (2).

15. Procédé selon l'une quelconque des revendications 1 à 13, comprenant en outre l'étape d'application d'une laque brillante de finition sur la surface A (4) du composant de garniture (2).
